# EUROPEAN PATENT SPECIFICATION

(11) **EP 4 001 714 B1**
(45) Date of publication and mention of the grant of the patent: **02.07.2025**
(21) Application number: 20425050.0
(22) Date of filing: 18.11.2020
(51) Int. Cl.: F16K 5/06, F16K 5/20, F16K 27/06

(54) **SHUT-OFF VALVE**
ABSPERRVENTIL
VANNE D'ARRÊT

(43) Date of publication of application: 25.05.2022
(73) Proprietor: VALPRES S.R.L., 25060 Marcheno, Brescia (IT)
(72) Inventor: Orzali, Mario, I-25133 Brescia (IT)
(74) Representative: Chimini, Francesco

(56) References cited:
- EP-A1- 3 150 887
- DE-A1- 4 414 243
- FR-A5- 2 202 572
- US-A- 4 059 250

## Description

The present invention relates to a fluid shut-off valve, a valve assembly, and a method for testing the seal on such a valve. The invention relates to valves for uses at a high temperature, i.e., in the range of 250°C to 400°C, for example for the petrochemical field.

There is a need, for this type of applications, to use materials which allow to ensure the required performance also at high temperatures. In particular, gaskets or other sealing and support members of the valve member, conventionally a floating ball made of soft materials, e.g., polymer materials, can not be used, and metal materials and graphite must be used. For example, metal materials are used to obtain the seats of the ball, while graphite is used for the sealing gaskets.

A problem associated with the use of these materials is the size variation thereof caused by the thermal expansions. Such a problem is particularly emphasized by the fact that the valve is assembled at room temperature (25°C) but needs then to work at high higher temperatures (250 to 400°C). Examples of shut-off valves according to the state of the art are disclosed in DE 4414243 A1, FR 2202572 A5, US 4059250 A and EP 3150887 A1.

In order to solve such a drawback, it is known to preload the members acting on the ball, in particular the sealing members, in jargon referred to as "seats", so as to compensate for the thermal expansions on average.

A valve of this type is known as a "3-piece" valve because it is formed up of a central valve body, which accommodates the spherical shutter and the related sealing members, and two end connecting members connected by bolted coupling to the central body, each suitable to connect a respective fluid inlet or outlet duct.

The elastic compensation members, conventionally springs, are supported by an inner annular surface of the respective connecting members.

This construction, commonly known as 3-piece construction, has the disadvantage that the removal of the central body from the ends, for example to perform maintenance on the functional members of the valve accommodated in the central body, results in the disassembly of the inner components (ball, seats, and possible springs)which are no longer held in place by the ends themselves.

The present invention pertains to such a context by aiming at providing a valve capable of overcoming the aforesaid drawbacks.

In particular, it is an object of the present invention to suggest a fluid shut-off valve of the above-mentioned three-piece type which allows it to be subjected to a seal test without the need for the two connecting members to the respective ducts of the system.

It is another object of the invention to suggest a shut-off valve capable of combining the above functionality during maintenance or seal test with the possibility of intercepting fluids with temperature up to 400°C.

Such objects are achieved by a shut-off valve according to claim 1, an assembly according to claim 12, and a test method according to claim 13. The claims dependent thereon show preferred variants.

The features and advantages of the shut-off valve according to the invention will however be apparent from the following description of preferred embodiments thereof, given by way indication and not by way of limitation, with reference to the accompanying drawings, in which:

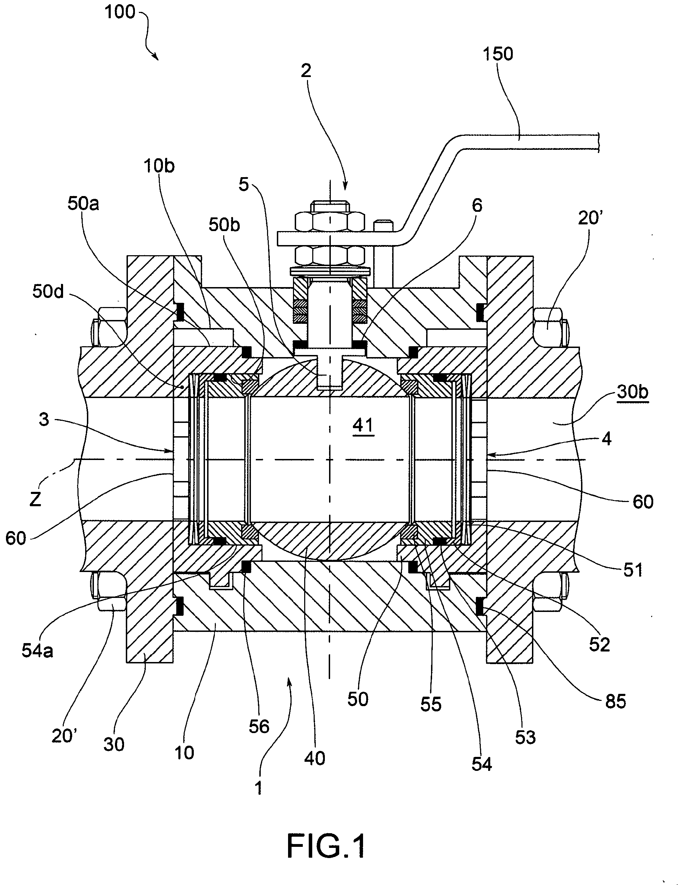

- Figure 1 is an axial cross section of a valve assembly according to the present invention, comprising a shut-off valve to which members to be joined to system ducts are connected;

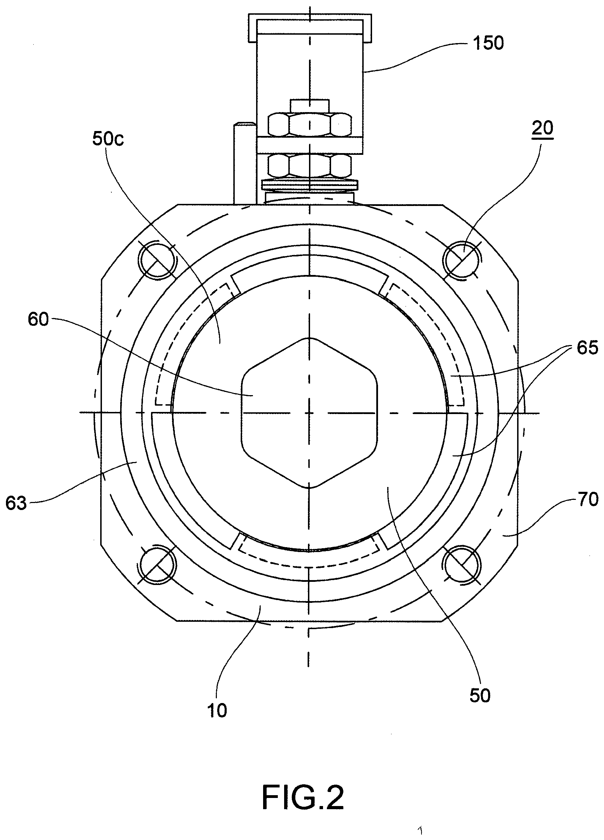

- Figure 2 is an end view of the shut-off valve; and

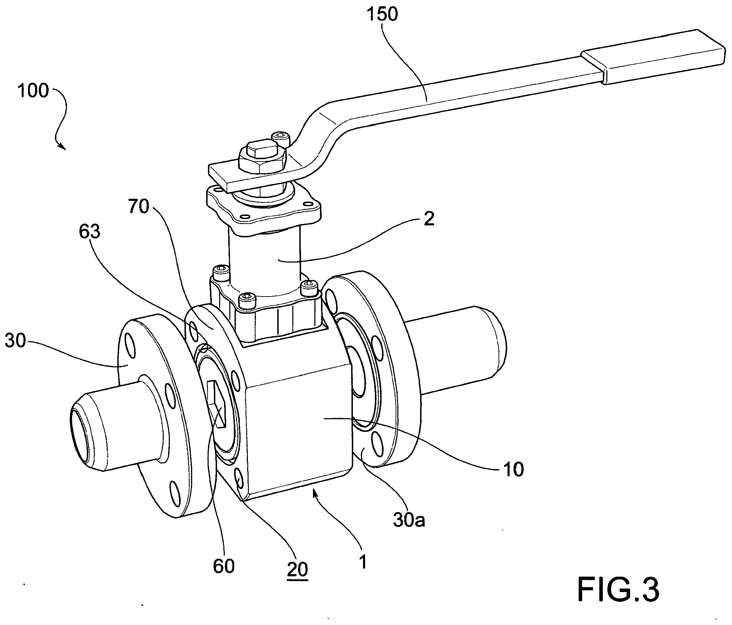

- Figure 3 is a perspective view of the valve assembly, with the joining members separate from the shut-off valve.

With reference to the aforesaid drawings, reference numeral 1 identifies, as a whole, a fluid shut-off valve according to the present invention.

Valve 1 comprises a valve body 10 which extends axially along a body axis Z between two opposite openings 3, 4 for the inlet and outlet of the fluid.

The valve body 10 is provided, at each end thereof delimiting a respective opening 3, 4, with connection means 20 to a respective joining member 30 suitable to be connected to a fluid inlet or outlet duct.

In certain embodiments, the connection means 20 consist of bolts 20'.

The valve further comprises a shutter 40 rotatably placed in the valve body 1 between the two inlet/outlet openings 3, 4.

For example, the shutter 40 is a floating ball shutter.

The shutter 40 is crossed by an axial passageway 41 suitable to put the two opposite openings 3, 4 into fluid communication and is rotatable between a closed position, in which it prevents the passage of the fluid from one opening to the other one, and an open position, in which it allows the passage of the fluid between the two openings of the valve body 10.

The valve further comprises two shutter seats 55 which rotatably support shutter 40.

Each shutter seat 55 is supported by a respective drawer 54. In certain embodiments, seat 55 and drawer 54 are made in one piece in a single body.

Each drawer 54 is elastically affected by a respective elastic compensation member 51 which applies to drawer 54 a compensation pressure directed towards the shutter 40.

Therefore, by virtue of the elastic compensation members 51, the seats 55 with respective drawers 54 are capable of ensuring the fluid sealing effect on the shutter during any expansion and/or contraction caused by the temperature.

According to an aspect of the invention, a head 50 defining an axial abutment for a respective elastic compensation member 51 is inserted with shape and/or force coupling into each of the inlet/outlet openings 3, 4 of the valve body 10.

In other words, each elastic compensation member 51 does not rest on a respective joining member 30, as in the valves of the known art, but it is retained in the valve body by a respective head 50 also inserted into the respective opening 3; 4 of the valve body 10.

Each head 50 has an outer side wall 50a which sealingly engages an inner side wall 10b of the valve body 10.

Each head 50 is axially crossed by a head opening 60 for the passage of the fluid.

Therefore, the presence of the heads 50 does not significantly affect the fluid operation of the valve, not causing losses of load for the passage of the fluid through the valve.

Moreover, each head 50 is inserted into the respective opening 3; 4 without engaging the connection means 20 with the joining member 30.

In other words, the presence of the heads 50 does not affect the connection of the valve body 10 to the joining members 30 either. Such a connection between valve body 10 and joining members 30 can thus occur in a conventional manner by means of the connection means 20, for example by means of bolts.

In other words, again, the heads 50 are mechanically independent of the joining members 30.

In certain embodiments, such as in the embodiment depicted, each head 50 is entirely inserted into a respective opening 3; 4 of the valve body 10.

According to the invention, each head 50 is connected to the valve body 10 by means of a bayonet coupling 65.

More in detail, each head 50 has an outer side wall 50a which engages an inner side wall 10b of the valve body 1. Such walls are configured to obtain the bayonet coupling 65 between each head 50 and the valve body 10.

In an embodiment, the head opening 60 is shaped so as to be engaged by a tool to lock/remove each head to/from the valve body 10. For example, the head opening 60 is hexagonal in shape.

In an embodiment, each end of the valve body 10 which delimits a respective opening 3; 4 forms a flange 70 for the coupling to a respective joining member 30. The latter has a planar surface 30a for the coupling to the respective flange 70. Such a planar surface 30a can extend radially towards the body axis Z so as to define a fluid passage gap 30b having a cross section substantially equal to that of the axial passageway 41 obtained in shutter 40. Each head 50 has an outer surface 50c which is coplanar to a respective flange 70. When the joining members 30 are fastened to the valve body 10, such an outer surface 50c of each head 50 faces, preferably abuttingly, the planar surface 30a of the joining member 30.

In an embodiment, the coupling flange 70 is provided by an indent 63 suitable to support a front sealing member 85.

In an embodiment, such a front sealing member 85 is placed between the valve body 10 and the joining member 30.

In an embodiment, the coupling flange 70 is made in one piece with the valve body 10.

In an embodiment, each head 50 has an inner side wall 50b which forms a containment seat of a respective drawer 54. In other words, each head 50 extends axially so as to surround a respective drawer 54. In an embodiment, the inner side wall 50b slidingly guides an external side wall 54a of drawer 54 so as to allow possible expansions or axial movements thereof under the action of the elastic compensation member 51.

In certain embodiments, each head forms a containment seat which receives drawer 54, seat 55 and the elastic compensation member 51 with shape coupling, i.e., with calibrated interference, so that the head 50 can be inserted into and/or removed from the valve body 1 together with such components preassembled in the head 50.

In an embodiment, each head 50 has a rear annular portion 50d which extends radially to act as a support surface for the elastic compensation member 51.

In an embodiment, the elastic compensation member 51 is a Belleville spring. However, also other types of springs can be used, for example helical or spiral or leaf springs.

In an embodiment, the elastic compensation member 51 acts on a compression ring 52 which in turn axially engages drawer 54.

In an embodiment, a drawer sealing ring 53 is interposed between compression ring 52 and drawer 54.

In an embodiment, a head sealing ring 56 is interposed between each head 50 and the valve body 10.

In an embodiment, the head sealing ring 56 and drawer sealing ring 53 are made of graphite.

In an embodiment, the elastic compensation members 51, seats 55 and compression rings 52 are made of metal material. In certain embodiments, the metallic material of seat 55 can be in the shape of, for example tungsten carbides, chromium carbides or hard Stellite coatings.

In other embodiments, seat 55 can be provided by polymer material, e.g., PTFE, reinforced PTFE, modified PTFE, TFM, PCTFE KEL-F, PEEK, DEVLON or any polymer material. In this case, the maximum operating temperature of the valve is determined by the temperature resistance features of the material used for the seats.

Advantageously, the use of graphite and of the metallic materials allows the valve to be used in spaces with a working temperature up to about 400° C and with operating pressures up to about 100 bar.

In an embodiment, valve 1 further comprises a shutter maneuvering stem 2 which extends in a rotatable manner in a respective stem seat obtained in the valve body and having a distal portion 5 configured to engage shutter 40 rotationally and a proximal portion operatively connected to a control lever 150.

In an embodiment, a stem sealing member 6 is inserted between the distal portion 5 and the valve body.

In an embodiment, also the stem sealing member 6 is made of a material suitable to use in high temperatures such as, for example the sealing members 53.

As mentioned above, the described shut-off valve 1 forms an independent valve unit by virtue of the presence of the heads 50 which retain the components in the correct position in the valve body. The present invention also relates to a valve assembly 100 which comprises the above-described valve 1 and the joining members 30 suitable to be removably connected to the respective ends 3, 4 of the valve body 10.

Valve 1 can be removed, by virtue of the heads 50, from the joining members 30 thus leaving, for example, the latter connected to the respective ducts of a system, for example to subject valve 1 to maintenance or a fluid seal test.

Therefore, the present invention also relates to a method for performing a fluid seal test on valve 1 alone.

In order to subject valve 1 to the seal test, it is sufficient to connect respective system joining members (not shown) to the ends 3, 4 of the valve body 10, for example by means of connection means 20, so as to connect valve 1 to a test system, for example a test bench.

According to an aspect of the invention, the valve 1 already installed in a system can be subjected to a fluid seal test or maintenance by removing it from the system but leaving the fluid inlet and outlet ducts connected to the joining members 30.

Therefore, the procedure for performing the test on valve 1 includes here:
- disconnecting valve 1 from the joining members 30, thus leaving the joining members 30 connected to the respective inlet and outlet ducts of the system;
- connecting respective system joining members at the ends of the valve body 10, for example but not necessarily using the connection means 20, so as to connect valve 1 to a test system;
- performing the seal test.

In an embodiment, a possible faulty component can be replaced if the valve does not pass the seal test.

The members to be joined to the test system are then removed from the respective ends of the valve body; at least one of the heads 50 is removed from the valve body 10 so as to access the components in the valve body. At this point, the faulty component is replaced.

The valve is reassembled by reconnecting the removed head to the valve body.

At this point, the joining members can be reconnected to the test system at the ends of the valve body and the seal test can be repeated.

In order to meet specific needs, those skilled in the art could make variations to the embodiments of the above shut-off valve, valve assembly and test method, or replace elements with others which are functionally equivalent.

Furthermore, each variant described as belonging to a possible embodiment may be implemented irrespective of the other described variants.

## Claims

1. A fluid shut-off device (1) for high temperature employments, for example in the petrochemical field, comprising:
- a valve body (10) which extends axially along a body axis (Z) between two opposite openings (3, 4) for the inlet and outlet of the fluid, the valve body (10) being provided, at each end thereof delimiting a respective opening, with connection means (20) to a respective joining member (30) to be joined to a fluid inlet or outlet duct;
- a shutter (40) rotatably placed in the valve body (1) between the two inlet/outlet openings (3, 4), the shutter (40) being crossed by an axial passageway (41) suitable to put the two opposite openings (3, 4) into fluid communication and being rotatable between a closed position, in which it prevents the passage of the fluid from one opening to the other opening of the valve body (10), and an open position, in which it allows the passage of the fluid between the two openings of the valve body (10);
- two shutter seats (55) which rotatably support the shutter (40), wherein each shutter seat (55) is supported by or is integral with a respective drawer (54);
wherein each drawer (54) is elastically affected by a respective elastic compensation member (51) which applies to the drawer (54) a compensation pressure directed towards the shutter (40),
and wherein a head (50) is inserted, with shape and/or force coupling, into each of the inlet/outlet openings (3, 4) of the valve body (10), the head defining an axial abutment for a respective elastic compensation member (51), wherein each head (50) has an outer side wall (50a) which sealingly engages an inner side wall (10b) of the valve body (10), is axially crossed by a head opening (60) for the passage of the fluid, and is inserted into the respective opening without engaging said connection means (20) with the joining member (30),
**characterized in that** the outer wall (50a) of the head and the inner side wall (10b) of the valve body (1) are connected to each other by means of bayonet coupling (65).

2. A valve (1) according to the preceding claim, wherein the head opening (60) is shaped so as to be engaged by a tool to lock/remove each head to/from the valve body (10).

3. A valve (1) according to any one of the preceding claims, wherein the ends of the valve body (10) form a flange (70) for the coupling to the respective connectors (30), and wherein each head (50) has an outer surface (50c) which is coplanar to a respective flange (70).

4. A valve (1) according to any one of the preceding claims, wherein each head (50) has an inner side wall (50b) which forms a containment seat of a respective drawer (54).

5. A valve (1) according to any one of the preceding claims, wherein the head (50) has an annular portion (50d) which extends radially to act as a support surface for the elastic compensation member (51).

6. A valve (1) according to any one of the preceding claims, wherein the elastic compensation member (51) is a spring, for example a Belleville spring.

7. A valve (1) according to any one of the preceding claims, wherein the elastic compensation member (51) acts on a compression ring (52) which axially engages the drawer (54) with the interposition of a drawer sealing ring (53).

8. A valve (1) according to any one of the preceding claims, wherein a head sealing ring (56) is interposed between each head (50) and the valve body (10), and wherein said head sealing ring (56) and drawer sealing ring (53) are made of graphite.

9. A valve (1) according to any preceding claim, wherein each elastic compensation member (51), each seat (55) and each compression ring (52) is made of metallic material.

10. A valve assembly, comprising a valve according to any one of the preceding claims and joining connectors (30) suitable to be removably connected to the respective ends of the valve body (10).

11. A test method for performing a seal test on a valve according to any one of the preceding claims, comprising the steps of:
- connecting respective system joining members at the ends of the valve body (10) so as to connect the valve (1) to a test system;
- performing the seal test.

12. A test method for performing a seal test on a valve according to any one of the preceding claims, when it is connected to fluid inlet and outlet ducts by means of joining connectors (30), comprising the steps of:
- disconnecting the valve from the joining connectors (30), thus leaving the joining connectors (30) connected to the respective inlet and outlet ducts;
- connecting respective system joining members at the ends of the valve body (10) so as to connect the valve (1) to a test system;
- performing the seal test.

13. A test method according to claim 11 or 12, wherein if the valve does not pass the seal test, the method comprises the steps of:
- removing the test system joining members from the respective ends of the valve body;
- removing at least one of the heads (50) from the valve body (10);
- replacing at least one faulty sealing member;
- reconnecting the at least one head to the valve body;
- reconnecting the system joining members at the ends of the valve body;
- repeating the seal test.

## Patentansprüche

1. Fluid-Absperrvorrichtung (1) für Hochtemperatur-Anwendungen, beispielsweise im petrochemischen Bereich, umfassend:
- einen Ventilkörper (10), welcher sich axial entlang einer Körperachse (Z) zwischen zwei entgegengesetzten Öffnungen (3, 4) für den Einlass und Auslass des Fluids erstreckt, wobei der Ventilkörper (10) an jedem Ende davon, welches eine jeweilige Öffnung begrenzt, mit Verbindungsmitteln (20) für ein jeweiliges Verbindungselement (30) bereitgestellt ist, um mit einem Fluideinlass- oder Fluidauslasskanal verbunden zu sein;
- einen Verschluss (40), welcher zwischen den zwei Einlass-/Auslassöffnungen (3, 4) rotierbar in dem Ventilkörper (10) platziert ist, wobei der Verschluss (40) von einem axialen Durchgang (41) gekreuzt wird, welcher dazu geeignet ist, die zwei entgegengesetzten Öffnungen (3, 4) in Fluidverbindung zu bringen, und zwischen einer geschlossenen Position, in welcher er den Durchgang des Fluids von einer Öffnung zu der anderen Öffnung des Ventilkörpers (10) verhindert, und einer offenen Position rotierbar ist, in welcher er den Durchgang des Fluids zwischen den zwei Öffnungen des Ventilkörpers (10) ermöglicht;
- zwei Verschlusssitze (55), welche den Verschluss (40) rotierbar haltern, wobei jeder Verschlusssitz (55) von einem jeweiligen Einschub (54) gehaltert ist oder integral mit diesem ist;
wobei jeder Einschub (54) von einem jeweiligen elastischen Kompensationselement (51) elastisch beeinflusst ist, welches auf den Einschub (54) einen Kompensationsdruck ausübt, welcher in Richtung des Verschlusses (40) gerichtet ist,
und wobei ein Kopf (50) mittels Form- und/oder Kraftkopplung in jede aus der Einlass-/Auslassöffnung (3, 4) des Ventilkörpers (10) eingeführt ist, wobei der Kopf einen axialen Anschlag für ein jeweiliges elastisches Kompensationselement (51) definiert, wobei jeder Kopf (50) eine äußere Seitenwand (50a) aufweist, welche dichtend in eine innere Seitenwand (10b) des Ventilkörpers (10) eingreift, axial von einer Kopföffnung (60) für den Durchgang des Fluids gekreuzt ist und ohne Eingriff der Verbindungsmittel (20) in das Verbindungselement (30) in die jeweilige Öffnung eingeführt ist,
**dadurch gekennzeichnet, dass** die äußere Wand (50a) des Kopfs und die innere Seitenwand (10b) des Ventilkörpers (1) miteinander mittels einer Bajonettkopplung verbunden sind (65).

2. Ventil (1) nach dem vorhergehenden Anspruch, wobei die Kopföffnung (60) geformt ist, um von einem Werkzeug eingegriffen zu sein, um jeden Kopf an dem Ventilkörper (10) zu verriegeln bzw. jeden Kopf von dem Ventilkörper (10) zu entfernen.

3. Ventil (1) nach einem der vorhergehenden Ansprüche, wobei die Enden des Ventilkörpers (10) einen Flansch (70) zum Koppeln mit den jeweiligen Verbindungsstücken (30) bilden, und wobei jeder Kopf (50) eine äußere Fläche (50c) aufweist, welche zu einem jeweiligen Flansch (70) komplanar ist.

4. Ventil (1) nach einem der vorhergehenden Ansprüche, wobei jeder Kopf (50) eine innere Seitenwand (50b) aufweist, welche einen Eingrenzungssitz eines jeweiligen Einschubs (54) bildet.

5. Ventil (1) nach einem der vorhergehenden Ansprüche, wobei der Kopf (50) einen ringförmigen Abschnitt (50d) aufweist, welcher sich radial erstreckt, um als eine Halterungsfläche für das elastische Kompensationselement (51) zu wirken.

6. Ventil (1) nach einem der vorhergehenden Ansprüche, wobei das elastische Kompensationselement (51) eine Feder ist, beispielsweise eine Tellerfeder.

7. Ventil (1) nach einem der vorhergehenden Ansprüche, wobei das elastische Kompensationselement (51) auf einen Kompressionsring (52) wirkt, welcher in den Einschub (54) durch die Einfügung eines Einschub-Dichtungsrings (53) axial eingreift.

8. Ventil (1) nach einem der vorhergehenden Ansprüche, wobei ein Kopf-Dichtungsring (56) zwischen jedem Kopf (50) und dem Ventilkörper (10) eingefügt ist, und wobei der Kopf-Dichtungsring (56) und der Einschub-Dichtungsring (53) aus Grafit hergestellt sind.

9. Ventil (1) nach einem der vorhergehenden Ansprüche, wobei jedes elastische Kompensationselement (51), jeder Sitz (55) und jeder Kompressionsring (52) aus einem metallischen Material hergestellt ist.

10. Ventilanordnung, umfassend ein Ventil nach einem der vorhergehenden Ansprüche und Verbindungsstücke (30), welche dazu geeignet sind, entfernbar mit den jeweiligen Enden des Ventilkörpers (10) verbunden zu sein.

11. Testverfahren zum Durchführen eines Dichtungstests an einem Ventil nach einem der vorhergehenden Ansprüche, umfassend die Schritte aus:
- Verbinden jeweiliger System-Verbindungselemente an den Enden des Ventilkörpers (10), um das Ventil (1) mit einem Test-System zu verbinden;
- Durchführen des Dichtungstests.

12. Testverfahren zum Durchführen eines Dichtungstests an einem Ventil nach einem der vorhergehenden Ansprüche, wenn es mittels Verbindungsstücken (30) mit Fluideinlass- und Fluidauslasskanälen verbunden ist, umfassend die Schritte aus:
- Trennen des Ventils von den Verbindungsstücken (30), wodurch die Verbindungsstücke (30) mit den jeweiligen Einlass- und Auslasskanälen verbunden bleiben;
- Verbinden jeweiliger System-Verbindungselemente an den Enden des Ventilkörpers (10), um das Ventil (1) mit einem Test-System zu verbinden;
- Durchführen des Dichtungstests.

13. Testverfahren nach Anspruch 11 oder 12, wobei, wenn das Ventil den Dichtungstest nicht besteht, das Verfahren die Schritte umfasst, aus:
- Entfernen der Test-System-Verbindungselemente von jeweiligen Enden des Ventilkörpers;
- Entfernen wenigstens eines Kopfes (50) von dem Ventilkörper (10);
- Ersetzen wenigstens eines fehlerhaften Dichtungselements;
- Erneutes Verbinden des wenigstens einen Kopfes mit dem Ventilkörper;
- Erneutes Verbinden der System-Verbindungselemente an den Enden des Ventilkörpers;
- Wiederholen des Dichtungstests.

## Revendications

1. Dispositif d'arrêt de fluide (1) pour des applications à haute température, par exemple dans le domaine pétrochimique, comprenant :
- un corps de vanne (10) qui s'étend axialement le long d'un axe de corps (Z) entre deux ouvertures opposées (3, 4) pour l'entrée et la sortie du fluide, le corps de vanne (10) étant pourvu, à chaque extrémité de celui-ci délimitant une ouverture respective, de moyens de connexion (20) à un élément de jonction (30) respectif à relier à une entrée de fluide ou un conduit de sortie ;
- un obturateur (40) placé de façon rotative dans le corps de vanne (10) entre les deux ouvertures d'entrée/sortie (3, 4), l'obturateur (40) étant croisé par un passage axial (41) adapté pour mettre les deux ouvertures opposées (3, 4) en communication fluidique et pouvant être tourné entre une position fermée, dans laquelle il empêche le passage du fluide d'une ouverture à l'autre ouverture du corps de vanne (10), et une position ouverte, dans laquelle il permet le passage du fluide entre les deux ouvertures du corps de vanne (10) ;
- deux sièges d'obturateur (55) qui supportent l'obturateur (40) de façon rotative, dans lesquels chaque siège d'obturateur (55) est supporté par ou est solidaire d'un tiroir respectif (54) ;
dans lesquels chaque tiroir (54) est élastiquement affecté par un élément de compensation élastique respectif (51) qui applique au tiroir (54) une pression de compensation dirigée vers l'obturateur (40),
et dans lesquels une tête (50) est insérée par couplage de forme ou de force dans chacune des ouvertures d'entrée/sortie (3, 4) du corps de vanne (10), la tête définissant une butée axiale pour un élément de compensation élastique respectif (51), dans lesquels chaque tête (50) a une paroi du côté extérieur (50a) qui est attachée de façon étanche à une paroi du côté intérieur (10b) du corps de vanne (10), est axialement croisée par une ouverture de tête (60) pour le passage du fluide et est insérée dans l'ouverture respective sans engager les moyens de connexion (20) avec l'élément de jonction (30),
**caractérisé en ce que** la paroi extérieur (50a) de la tête et la paroi du côté intérieur (10b) du corps de vanne (1) sont connectées l'une à l'autre par un couplage à baïonnette (65).

2. Vanne (1) selon la revendication précédente, dans laquelle l'ouverture de tête (60) est formée de façon à être engagée par un outil pour verrouiller/enlever chaque tête au/du corps de vanne (10).

3. Vanne (1) selon l'une des revendications précédentes, dans laquelle les extrémités du corps de vanne (10) forment une bride (70) pour l'accouplement aux connecteurs (30) respectifs et dans laquelle chaque tête (50) a une surface extérieure (50c) qui est coplanaire à une bride (70) respective.

4. Vanne (1) selon l'une des revendications précédentes, dans laquelle chaque tête (50) a une paroi côté intérieur (50b) qui forme un siège de confinement d'un tiroir (54) respectif.

5. Vanne (1) selon l'une des revendications précédentes, dans laquelle la tête (50) a une partie annulaire (50d) qui s'étend radialement pour agir comme une surface de support pour l'élément de compensation élastique (51).

6. Vanne (1) selon l'une des revendications précédentes, dans laquelle l'élément de compensation élastique (51) est un ressort, par exemple un ressort Belleville.

7. Vanne (1) selon l'une des revendications précédentes, dans laquelle l'élément de compensation (51) agit sur un anneau de compression (52) qui s'engage axialement avec le tiroir (54) avec l'interposition d'un anneau de scellement de tiroir (53).

8. Vanne (1) selon l'une des revendications précédentes, dans laquelle un anneau de scellement de tête (56) est interposé entre chaque tête (50) et le corps de vanne (10) et dans laquelle chaque anneau de scellement de tête (56) et anneau de scellement de tiroir (53) sont faits en graphite.

9. Vanne (1) selon l'une des revendications précédentes, dans laquelle chaque élément de compensation élastique (51), chaque siège (55) et chaque anneau de compression (52) sont faits en un matériau métallique.

10. Ensemble de vanne comprenant une vanne selon l'une des revendications précédentes et des connecteurs d'assemblage (30) adaptés pour être raccordés de façon amovible aux extrémités respectives du corps de vanne (10).

11. Procédé d'essai pour effectuer un essai de joint sur une vanne selon l'une des revendications précédentes, comprenant les étapes de
- connecter des éléments d'assemblage de système respectifs aux extrémités du corps de vanne (10) afin de connecter la vanne (1) à un système de test ;
- effectuer l'essai de scellement.

12. Procédé d'essai pour effectuer un essai de scellement sur une vanne selon l'une des revendications précédentes lorsqu'elle est reliée à des conduits d'entrée de fluide et de sortie moyennant des connecteurs de jonction (30), comprenant les étapes de :
- déconnecter la vanne des connecteurs de jonction (30), laissant ainsi les connecteurs de jonction (30) connectés aux conduits d'entrée et de sortie respectifs ;
- connecter les éléments de jonction de système respectifs aux extrémités du corps de vanne (10) afin de connecter la vanne (1) à un système de test ;
- effectuer l'essai de scellement.

13. Procédé d'essai selon la revendication 11 ou 12, dans lequel, si les vannes ne passent pas l'essai de scellement, le procédé comprend les étapes de :
- enlever les éléments de jonction de système de test des extrémités respectives du corps de vanne ;
- enlever au moins une des têtes (50) du corps de vanne (10) ;
- remplacer au moins un élément de scellement fautif ;
- reconnecter ladite au moins une tête au corps de vanne ;
- reconnecter les éléments de jonction de système aux extrémités de corps de vanne ;
- répéter l'essai de scellement.
